# EUROPÄISCHE PATENTSCHRIFT

(11) **EP 0 633 419 B1**
(45) Veröffentlichungstag und Bekanntmachung des Hinweises auf die Patenterteilung: **06.05.1998**
(21) Anmeldenummer: 94109361.9
(22) Anmeldetag: 17.06.1994
(51) Int. Cl.: F16L 57/00, F16L 1/11, F16L 59/02

(54) **Schutzumhüllung für ein erdverlegbares Rohr**
Protective cover for a ground laid pipe
Gaine de protection pour un tuyau posé en terre

(30) Priorität: 30.06.1993 DE 9309679 U
(43) Veröffentlichungstag der Anmeldung: 11.01.1995
(73) Patentinhaber: DENSO-Holding GmbH & Co., 51371 Leverkusen (DE)
(72) Erfinder:
(74) Vertreter: Langmaack, Jürgen, Dipl.-Ing.

(56) Entgegenhaltungen:
- EP-A- 0 010 835
- EP-A- 0 570 353
- EP-A- 0 588 089
- FR-A- 1 189 044
- FR-A- 2 359 360
- US-A- 2 650 619
- US-A- 5 099 889

## Beschreibung

Die Erfindung betrifft eine Schutzumhüllungfürein erdverlegbares Rohr, insbesondere ein Rohr aus Kunststoff, vorzugsweise ein druckfestes Rohr aus HDPE für Gasleitungen entsprechend dem Oberbegriff des Anspruchs 1.

In neuerer Zeit ist man dazu übergegangen, für erdverlegte Gasleitungen anstelle von kunststoffummantelten Stahlrohren Kunststoffrohre zu verwenden, insbesondere aus HDPE (high density Polyethylen), da derartige Kunststoffrohre den Betriebsanforderungen durchaus genügen, gegenüber den kunststoffummantelten Stahlrohren jedoch den Vorteil der Korrosionsfestigkeit besitzen. Die Erdverlegung erfolgt in üblicher Weise durch Ausheben eines Grabens in entsprechender Tiefe, der nach dem Einlegen des Rohrstranges, wobei die einzelnen Rohrstücke zu einem durchgehenden Rohrstrang miteinander verschweißt werden, wieder mit dem ausgehobenen Erdreich verfüllt wird. Da der wiedereinzufüllende Aushub mehr oder weniger stark mit Steinen, auch scharfkantigen spitzen Steinen durchsetzt ist, besteht hierbei die erhebliche Gefahr, daß ein unmittelbar auf dem Kunststoffrohr liegender Stein teilweise in die Rohrwandung eindringt, so daß hier bei der anschließenden Verdichtung des Aushubes eine Beschädigung der Rohrwandung erfolgen kann. Um dies zu vermeiden, wurde bisher vorgeschrieben, daß das Rohr auf eine Sandschicht gebettet und anschließend zunächst mit einer Sandschicht abgedeckt werden mußte, bevor der Graben mit dem Erdaushub wieder verfüllt werden konnte. Dieses Verfahren ist sehr aufwendig, zumal der Sand zusätzlich herangefahren und in den Graben eingebracht werden muß.

Aus US-A-5,099,889 ist es bekannt, zum Schutz eines in der Erde zu verlegenden Rohres Matten aus einem Kunststoffasermaterial in Umfangsrichtung um das zu schützende Rohr zu wickeln, wobei die in Längsrichtung verlaufenden, breit überlappenden Ränder der einzelnen Matten miteinander fest zu verkleben sind. Die Umwicklung muß, der Rohrlänge folgend, durch mehrere Matten abschnittweise und mit breiter Überdeckung vorgenommen werden, damit jeder unmittelbare Kontakt zwischen dem einzufüllenden Erdreich und der Rohrwandung des Kunststoffrohres zuverlässig vermieden wird.

Der Erfindung liegt die Aufgabe zugrunde, eine Schutzumhüllung der eingangs bezeichneten Art zu schaffen, welche die Mangel der bekannten Schutzumhüllung behebt.

Diese Aufgabe wird gemäß der Erfindung mit den im Kennzeichnungsteil des Anspruchs 1 angegebenen mitteln gelöst. Das mattenförmige Kunststoffasermaterial des Schlauches wird vorzugsweise durch ein homogenes Kunststoffaservlies gebildet, das vorzugsweise ein Flächengewicht von mindestens 400 bis 1500 g/m³ besitzt. Als Fasermaterial kommen hier Polyester, Polypropylen, Polyethylen, sowie andere unverrottbare Kunststoffe in Betracht. Eine derartige Faservliesmatte weist in unbelastetem Zustand eine Dicke von etwa 4 bis 15 mm auf. Dadurch, daß das Rohr über seine volle Länge mit einer derartigen Umhüllung versehen ist, besteht die Möglichkeit, das umhüllte Rohr unmittelbar in den Graben einzulegen. Die Umhüllung ist verrottungsbeständig, auch beständig gegen aggressive Bodenlösungen, sehr reißfest und insbesondere stoßabfangend und lastverteilend. Die Umhüllung kann bei allen Verarbeitungstemperaturen aufgebracht werden. Dadurch, daß die Umhüllung nicht fest mit der Rohroberfläche verbunden ist, ergibt sich darüber hinaus eine Entkoppelung zwischen der Rohrwandung einerseits und dem umgebenden Erdreich andererseits. Das bedeutet, daß bei Längenänderungen des Rohrstranges, beispielsweise temperaturbedingten Längenänderungen sich das Rohr gegenüber dem Erdreich bewegen kann, ohne daß es hierbei zu Zwängungen kommt.

Die Umhüllung in Form eines aus dem mattenförmigen Kunststoffasermaterial hergestellten Schlauches, der lose auf das Rohr aufgezogen ist, stellt verarbeitungstechnisch einen wesentlichen Fortschritt gegenüber der Umhüllung durch Umwickeln dar, da hierdurch auf komplizierte Wickelgeräte verzichtet werden kann. Rohre und Umhüllung können getrennt voneinander zur Baustelle angeliefert und auf der Baustelle gelagert werden. Da das mattenförmige Kunststoffasermaterial einfach zu handhaben ist, kann ein derartiger Schlauch zunächst aufgerollt werden und dann noch auf der Baustelle auf die einzelnen Rohrstücke in einfacher Weise aufgeschoben werden. Es ist aber auch möglich, die Schläuche werkstattmäßig auf die Rohre aufzuziehen und so fertige Rohre auf der Baustelle anzuliefern. Die jeweiligen Rohrenden können bei der gegebenen Bildsamkeit des Kunststoffasermaterials an den Enden zusammengeschoben werden, so daß die Schweißarbeiten ohne weiteres durchgeführt werden können. Die Länge des Schlauches ist hierbei zweckmäßigerweise größer als die Länge des umhüllten Rohres, wobei die hierdurch gegebene Überlänge für Lagerung und Transport durch Stauchung und des Zusammenschiebens des Schlauches auf dem Rohr zunächst einmal "verstaut" werden kann. Der Schlauch kann hierbei bereits beim Herstellen des Faservlieses "rundgewirkt" werden. Zweckmäßig ist es jedoch, den Schlauch aus einem Mattenstreifen zu bilden, der über eine Längsnaht zusammengefügt ist. Die Längsnaht kann hierbei sich sowohl in axialer Richtung parallel zu einer Mantellinie des Schlauches erstrecken oder aber nach Art eines Wickelrohres sich wendelförmig über den Umfang erstrecken.

Nach dem Verschweißen der jeweiligen Rohrenden können die jeweiligen "Überlängen" des Schlauches im Stoßbereich übereinander geschoben werden, so daß sich im Bereich des Schweißstosses eine entsprechende Überdeckung von beispielsweise 50 bis 100 mm ergibt. Besonders zweckmäßig ist es hierbei, wenn wenigstens ein Ende des Schlauches jeweils mit einem textilen Hakenband versehen ist, das über wenigstens einen Teil des Umfangs umlaufend am Schlauch befestigt ist. Dieses textile Hakenband wirkt zusammen mit den Fasern des Kunststoffvlieses des angrenzenden Schlauches nach Art eines Klettverschlusses. Bringt man beide Enden im Überlappungsbereich übereinander, so ergibt sich hier eine mechanische Festlegung der beiden Schlauchenden miteinander, ohne daß hier die schützenden Eigenschaften des Mattenmaterials durch die Verbindung beeinträchtigt würden. Besonders zweckmäßig ist es hierbei, wenn die Hakenseite des Hakenbandes gegen die Außenwandung des Rohres gerichtet ist. Dies hat den Vorteil, daß bei Lagerung und Transport die Haken des Hakenbandes nicht unmittelbar mit dem Faservlies in Berührung kommen können, beispielsweise wenn die Rohre bei Lagerung und Transport aufeinandergestapelt werden. Für die Montage wird dann das mit dem Hakenband versehene Ende umgestülpt, so daß die Haken nach außen weisen, also wiederum nicht mit Vlies in Verbindung kommen können, und nach dem Verschweißen der beiden Rohrenden wird zunächst das benachbarte Vliesende über die Schweißstelle bzw. über die Stoßstelle geschoben und dann das Ende mit dem Hakenband umgeschlagen und auf das darunterliegende Faservlies gedrückt.

In weiterer Ausgestaltung der Erfindung ist vorgesehen, daß das Rohr wenigstens zweilagig mit dem Kunststoffasermattenmaterial umhüllt ist.

Die Erfindung betrifft ferner in einer weiteren Ausgestaltung eine Schutzumhüllung für ein erdverlegbares Rohr, vorzugsweise ein druckfestes Gasrohr aus HDPE, die erfindungsgemäß durch eine schlauchförmig konfektionierte, auf das Rohr schiebend-ziehend aufbringbare Kunststoffasermatte aus einem Kunstfaservlies gebildet wird. Eine derartige Schutzumhüllung kann rollenförmig aufgewickelt zur Baustelle antransportiert werden und dort nach den Anforderungen abgelängt und auf das Rohr aufgezogen werden. Insbesondere ist es möglich, hier Schlauchlängen von bis zu 50 m Länge zur Verfügung zu stellen, so daß es durchaus möglich ist, mehrere Rohrstücke zunächst miteinander zu verschweißen und dann ein entsprechend langes Schlauchstück aufzuziehen.

Die Erfindung betrifft ferner eine Schutzumhüllung aus einem mattenförmigen Kunststoffasermaterial für ein erdverlegbares Rohr, insbesondere eine Schlauchförmige Schutzumhüllung mit den Merkmalen der Ansprüche 1 bis 6.

Dieser weiterentwickelten Erfindung liegt die Aufgabe zugrunde, eine Schutzumhüllung zu schaffen, die ein Detektieren verlegter Rohrleitungen ermöglicht. Es hat sich nämlich herausgestellt, daß mit zunehmender Substitution von kunststoffumhüllten Stahlrohren durch reine Kunststoffrohre erhebliche Probleme bei späteren Aufgrabungen der Rohrtrasse entstehen können. Hierbei reicht es nicht aus, wenn, wie bisher üblich, das Kunststoffrohr, insbesondere ein mit einer Schutzumhüllung aus einem mattenförmigen Kunststoffasermaterial versehener Rohrstrang zunächst mit einer entsprechend dick bemessenen Sandschicht abgedeckt wird, bevor der Rohrgraben vollständig verfüllt wird. Muß bei späteren Arbeiten das Erdreich wieder aufgegraben werden, was heute im wesentlichen mit Hilfe von entsprechenden Grabenbaggern erfolgt, dann ist der Verlauf einer im Erdreich liegenden Rohrleitung nicht immer genau auszumachen, so daß in hohem Maße die Gefahr besteht, daß durch die Maschinenarbeiten das Rohr beschädigt wird, da der Maschinenführer auch bei der Verwendung einer entsprechend dicken Sandschicht nicht immer den Eingriff bemessen kann.

Für Hausinstallationen ist es aus der EP-A-0 010 835 bekannt, Kunststoffrohre mit einem Streifen aus einem elektrisch oder magnetisch leitenden Material zu versehen, um diese später nach ihrer Überdeckung durch Putz, Mörtel oder dergleichen detektieren zu können. Der elektrisch oder magnetisch leitende Streifen wird bereits bei der Herstellung der Rohre in die Rohrwandung integriert, so daß durch das Einbinden des Streifens in das Kunststoffmaterial die Rohrwandung in diesem Bereich eine Inhomogenität aufweist oder sogar die tragende Wandstärke entsprechend reduziert ist.

Um für erdverlegte Kunststoffrohre vor dem Beginn derartiger Arbeiten den genauen Verlauf festlegen zu können, wird erfindungsgemäß vorgeschlagen, daß bei der Verwendung derartiger Schutzumhüllungen aus einem mattenförmigen Kunststoffasermaterial das mattenförmige Kunststoffmaterial je Teillänge mit wenigstens einem Metallelement verbunden ist. Das Metallelement kann hierbei auf der der Rohrwandung zugekehrten, auf der der Rohrwandung abgekehrten Fläche des mattenförmigen Kunststoffmaterials angeordnet sein, oder aber in besonders zweckmäßiger Ausgestaltung in das mattenförmige Kunststoffasermaterial integriert sein. Das Metallelement kann mit dem mattenförmigen Kunststoffasermaterial fest verbunden sein, so daß es beim Aufbringen der Schutzumhüllung zusammen mit dem mattenförmigen Kunststoffasermaterial auf das Kunststoffrohr aufgebracht wird. Es ist aber auch möglich, daß entweder zuerst das Metallelement auf das Rohr aufgebracht wird, dann das mattenförmige Kunststoffasermaterial darübergelegt wird oder umgekehrt.

In Ausgestaltung der Erfindung ist vorgesehen, daß als Metallelement wenigstens ein Metalldraht vorgesehen ist. Der Metalldraht umfaßt hierbei sowohl einen Draht mit rundem Querschnitt als auch einen Metallstreifen bzw. ein Metallband mit einer Dicke von 0,5 mm bis 2 mm und einer Breite von wenigen Millimetern bis zu etwa 50 mm. Ein derartiger Metalldraht im Sinne der vorliegenden Definition kann hierbei in Längsrichtung des Rohres verlaufen, in Umfangsrichtung des Rohres verlaufen oder aber auch bei einer wendelförmig überlagernden Aufbringung des mattenförmigen Kunststoffasermaterials entsprechend wendelförmig um das Rohr herum verlaufend angeordnet sein.

In einer anderen Ausgestaltung ist vorgesehen, daß mehrere Metallelemente in Form von Metalldrähten vorgesehen sind, die eine Gitterstruktur bilden. Dies kann beispielsweise durch eine gegenläufig wendelförmige Anordnung geschehen oder aber durch die Verwendung eines entsprechend ausgebildeten Maschengitters.

In einer anderen Ausgestaltung ist vorgesehen, daß das Metallelement als Schließelement ausgebildet ist, mit dem aneinandergrenzende Ränder des mattenförmigen Kunststoffasermaterials miteinander verbunden sind. Bei einer in bezug auf die Erstreckung des zu umhüllenden Rohres längslaufenden Randnaht sind hierbei zweckmäßigerweise mehrere Metallelemente mit Abstand zueinander vorgesehen, die zugleich den Verschluß für die Randnaht bilden.

In weiterer Ausgestaltung der Erfindung ist vorgesehen, daß das Metallelement mit einem Korrosionsschutzmantel versehen ist. Dieser Korrosionsschutzmantel kann beispielsweise aus einem Kunststoff bestehen, der gegen die chemischen Einflüsse des Erdreiches resistent ist.

Die Erfindung wird anhand schematischer Zeichnungen eines Ausführungsbeispieles näher erläutert. Es zeigen:
- Fig. 1: einen aus mehreren Teilstücken zusammengesetzten Rohrstrang mit Umhüllung,
- Fig. 2: in größerem Maßstab im Teilschnitt die einander zugekehrten Enden miteinander zu verbindender Rohre vor dem Verschweißen,
- Fig. 3: die Rohrenden gem. Fig. 2 nach dem Verschweißen und dem Verbinden der Enden der Umhüllung,
- Fig. 4: ein Rohr mit einer schlauchförmigen Umhüllung aus einem mattenförmigen Kunststoffasermaterial mit integrierten Metallelementen,
- Fig. 5: eine andere Ausführungsform für eine Schutzumhüllung,
- Fig. 6: im Querschnitt ein Rohr mit einer Schutzumhüllung in der Ausführungsform gem. Fig. 5.

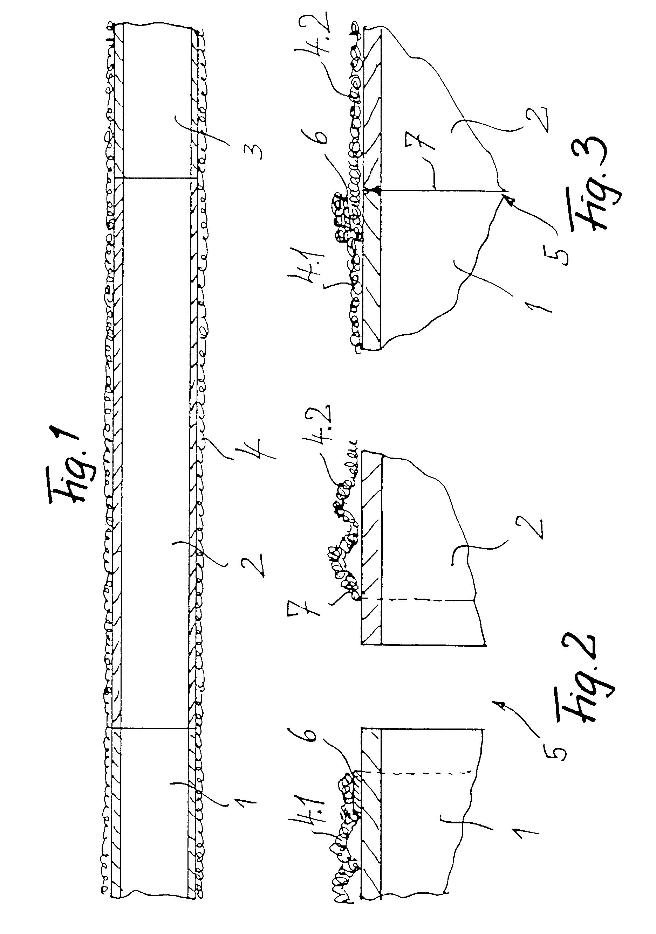

Der in Fig. 1 in einem Längsschnitt dargestellte Teil eines Rohrstranges besteht aus drei Rohrstücken 1, 2 und 3, die stumpf aneinandergeschweißt sind. Die einzelnen Rohrstücke 1, 2 und 3 sind hierbei werkseitig mit einer Umhüllung 4 in Form eines Schlauches versehen, der aus einem mattenförmigen Kunststoffasermaterial in Form eines Faservlieses besteht. Die einzelnen Stücke des Schlauches sind hierbei jeweils auf die Rohrstücke 1, 2 und 3 lose aufgeschoben.

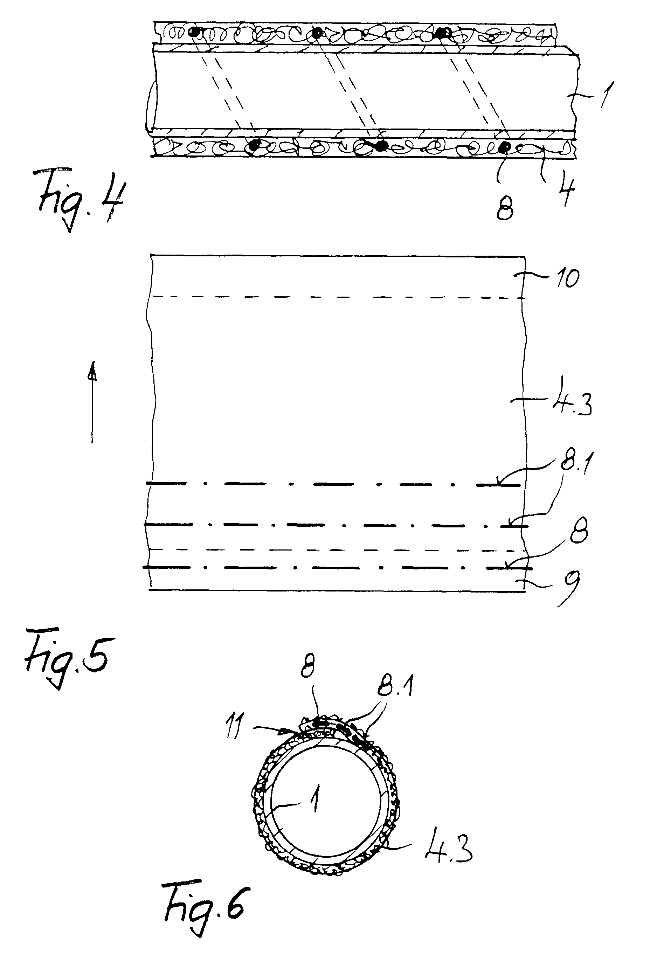

Fig. 2 zeigt den Rohrstoß 5 zwischen den beiden Rohrstücken 1 und 2 vor dem Verschweißen der beiden Rohre. Bei diesem Beispiel ist das Ende der schlauchförmigen Umhüllung 4.1 auf der Innenseite mit einem textilen Hakenband 6 versehen, wobei die Hakenseite auf der Außenwandung des Rohres 1 aufliegt. Um den Rohrstoß zwischen den beiden Rohren 1 und 2 verschweißen zu können, ohne daß das Kunststoffasermaterial der schlauchförmigen Umhüllung 4.1 beeinträchtigt wird, ist diese, wie in der Zeichnung angedeutet, vom Rohrende zurückgeschoben.

Die schlauchartige Umhüllung 4.2 des anzuschließenden Rohres 2 ist an dem dem Rohr 1 zugekehrten Ende ebenso wie das entsprechende Ende des Rohres 1 ebenfalls zurückgeschoben, wobei die Schlauchlänge so bemessen ist, daß nach dem Verbinden, wie aus Fig. 3 ersichtlich, das freie Ende der schlauchförmigen Umhüllung 4.2 über die Schweißnaht herübergezogen werden kann. Auch hier ist vor dem Verschweißen das freie Ende der schlauchförmigen Umhüllung 4.2 zunächst auf der Rohroberfläche des Rohres 2 zurückgeschoben.

Nach dem Verschweißen der beiden Rohre 1 und 2 wird zunächst das freie Ende der schlauchförmigen Umhüllung 4.2 über die Schweißnaht 7 gezogen. Anschließend wird das freie Ende der schlauchförmigen Umhüllung 4.1 mit seinem Hakenband 6 über das Ende der schlauchförmigen Umhüllung 4.2 gezogen und das Hakenband 6 auf die Außenseite der schlauchförmigen Umhüllung 4.2 aufgedrückt, so daß sich hier eine formschlüssige Verbindung ergibt.

Die Erfindung ist hierbei nicht beschränkt auf schweißbare Rohre mit gleichem Durchmesser, sondern kann aufgrund der guten Verformbarkeit des Fasermaterials auch für Rohre mit Muffenverbindung verwendet werden, da das Fasermaterial sich innerhalb der hier vorgegebenen Grenzen in ausreichendem Maße im Muffenbereich aufweiten läßt.

Bei einer doppellagigen Umhüllung werden zweckmäßigerweise zunächst über eine Hilfsvorrichtung die beiden Schläuche ineinandergesteckt oder aber bei der Herstellung bereits ein zweilagiger Schlauch gebildet. Aufgrund der faserigen Oberflächenstruktur sind die beiden Schläuche in Längsrichtung unverschiebbar formschlüssig miteinander verbunden, so daß ein derartiger mehrlagiger Schlauch (auch drei Lagen sind möglich) in einer allerdings entsprechend dicken Rolle wickelbar ist. Da die einzelnen Schlauchlagen in Längsrichtung praktisch nicht verschiebbar sind, kann auch ein derartige mehrlagiger Schlauch, wie vorstehend beschrieben, auf das Rohr aufgeschoben werden.

In Fig. 4 ist in einem Teillängsschnitt ein Kunststoffrohr 1 dargestellt, das mit einer schlauchartigen Umhüllung 4 aus einem mattenförmigen Kunststoffasermaterial umhüllt ist. Da ein derart ausgerüstetes Rohr nach seiner Verlegung im Erdreich und nach Verfüllung des Rohrgrabens nicht mehr ohne weiteres detektierbar ist, ist bei der in Fig. 4 dargestellten Ausführungsform die schlauchartige Umhüllung 4 mit einem draht- oder bandförmigen Metallelement 8 kombiniert. Wird ein derartiges Rohr mit der schlauchartigen Umhüllung vorkonfektioniert angeliefert, dann besteht die Möglichkeit, zunächst das draht- bzw. bandförmige Metallelement auf das Kunststoffrohr durch wendelförmiges Umwickeln aufzubringen und anschließend, wie vorbeschrieben, die schlauchartige Umhüllung 4 aufzuziehen. Zweckmäßig ist es jedoch, wenn das draht- oder bandförmige Metallelement 8 in das mattenförmige Kunststoffasermaterial integriert ist, beispielsweise durch Verklebung mit der Schlauchinnenseite oder aber durch Einbindung in die Fasermatrix. Anstelle eines wendelförmig verlaufenden draht- oder bandförmigen Metallelementes können auch einzelne Platten- oder Streifenstücke in das Fasermaterial integriert sein, so daß die schlauchförmige Umhüllung für Transport und Lagerung gewickelt werden kann und erst zum Aufbringen auf ein Rohr abgezogen und abgelängt wird. Durch die Anordnung einer Vielzahl von abgeteilten Metallelementen bleibt hiermit die Flexibilität des schlauchförmigen Kunststoffmaterials erhalten. Sowohl das draht- bzw. bandförmige Metallelement als auch in Form von Einzelstücken in das Material eingebundene Metallelenente sind mit einer Korrosionsschutzhülle versehen, beispielsweise aus einem Kunststoff, so daß auch nach langer Liegezeit keine Zersetzung der Metallelemente erfolgt und somit ein derartiger Rohrstrang immer noch mit entsprechenden Metalldetektoren in seinem Verlauf geortet und festgelegt werden kann.

In Fig. 5 ist in einer Abwicklung eine Schutzumhüllung 4.3 aus einem mattenartigen Kunststoffasermaterial dargestellt, die im wesentlichen eine flache Matte bildet. Eine derartige Schutzumhüllung ist zumindest im Bereich 9 einer Längskante, vorzugsweise aber im Bereich der beiden Parallellängskanten 9, 10 mit'hier nicht näher dargestellten Haftmitteln versehen, so daß eine derartige Schutzumhüllung 4.3, wie im Schnitt gem. Fig. 6 dargestellt, um ein Rohr 1 herumgelegt werden kann und durch Überlappen der Randbereiche 9, 10 unter gleichzeitiger Verbindung der dort aufgebrachten Haftmittel, beispielsweise Klebern. Klammern oder dergl. zu einem Schlauch mit Längsnaht verschlossen werden kann.

Hierbei kann ein beispielsweise draht- oder bandformiges Metallelement 8 (hier strichpunktiert dargestellt) in einem der beiden Randbereiche, zweckmäßigerweise in dem außenliegenden Randbereich, in das mattenförmige Fasermaterial eingebunden sein. Da die Matten in Richtung des Pfeiles 12 (Fig. 5) aufgerollt werden können, stellt beispielsweise ein bandförmiges Metallelement keine Beeinträchtigung der Bearbeitbarkeit dar.

Die Anordnung nur eines bandförmigen Metallelementes 8 macht es notwendig, daß die Längsnaht zweckmäßigerweise immer auf der Oberseite des Rohres verläuft. Um hier von der Lage der durch die Überlappung der Ränder 9, 10 gebildeten Längsnaht 11 unabhängig zu sein, ist es ebenfalls möglich, wie in Fig. 5 angedeutet, mehrere parallele draht- oder bandförmige Metallelemente 8.1 parallel nebeneinander verlaufend in das Kunststoffasermaterial einzubringen. Hierbei besteht auch die Möglichkeit, mehrere derartiger Metallelemente 8.1 bevorzugt und in verhältnismäßig dichtem Abstand zueinander in einem oder beiden Randbereichen 9, 10 vorzusehen, so daß ohne Beeinträchigung der Wickelbarkeit der Matte 4.3 ein hoher Metallanteil für den Nahtbereich vorhanden ist und so später im Metalldetektor ein hinreichend starkes Signal erzeugt wird. Selbstverständlich ist es auch bei der Verarbeitung derartiger mattenförmiger Schutzumhüllungen 4.3 möglich, diese ohne Metallelemente auszuführen, wobei denn zunächst auf das Kunststoffrohr ein oder mehrere Metallelemente durch Aufkleben, Umwickeln oder dergl. aufgebracht werden und daß anschließend das so vorbereitete Rohr mit der Schutzumhüllung 4.3 umhüllt wird.

Auch bei derartigen flachen Schutzumhüllungen, wie sie anhand von Fig. 5 und 6 beschrieben sind, die unter Bildung einer Längsnaht auf das Rohr aufgebracht werden, können in gleicher Weise die Metallelemente auch durch einzelne Metallstücke in Form von Bandabschnitten, Platten oder dergl. vorgesehen werden.

Anstelle von Metallen in Form von Drähten oder Bändern können alle Materialien verwendet werden, die eine nachträgliche Detektion des in der Erde verlegten Rohres ermöglichen. So sind beispielsweise entsprechende Elemente denkbar, die aus einer Kunststoffmatrix mit eingebundenem Metallpulver, beispielsweise Eisenpulver, bestehen. Hierbei ist es möglich, derartige Kunststoffdrähte, -fäden oder auch -fasern bei der Herstellung der Rohrschutzmatte in den Faserverbund zumindest als Teilmaterial einzubringen, sofern nicht die Rohrschutzmatte insgesamt aus derartig mit Metallanteilen versetzten Fäden oder Fasern hergestellt wird.

## Patentansprüche

1. Schutzumhüllung für ein erdverlegbares Rohr, insbesondere Rohr aus Kunststoff, vorzugsweise druckfestes Rohr aus HDPE für Gasleitungen, die wenigstens eine Umhüllung (4) aus einem mattenförmigen Kunststofffasermaterial bildet, dadurch gekennzeichnet, daß die Umhüllung (4) in Form eines aus dem Kunststoffasermaterial hergestellten Schlauches gebildet ist, der lose auf das Rohr (1, 2) aufziehbar ist.

2. Schutzumhüllung nach Anspruch 1, dadurch gekennzeichnet, daß die schlauchförmige, aus einem Kunststoffaservlies konfektionierte Kunststoffmatte so bemessen ist, daß sie auf das Rohr schiebend-ziehend aufbringbar ist.

3. Schutzumhüllung nach Anspruch 1 und 2, dadurch gekennzeichnet, daß der Schlauch aus einem Mattenstreifen gebildet ist, der über eine Längsnaht zusammengefügt ist.

4. Schutzumhüllung nach einem der Ansprüche 1 bis 3, dadurch gekennzeichnet, daß wenigstens ein Ende des Schlauches jeweils mit einem textilen Hakenband (6) versehen ist, das über wenigstens einen Teil des Umfangs umlaufend am Schlauch befestigt ist.

5. Schutzumhüllung nach einem der Ansprüche 1 bis 4, dadurch gekennzeichnet, daß die Hakenseite des Hakenbandes (6) gegen die Außenwandung des Rohres (1) gerichtet wird.

6. Schutzumhüllung nach einem der Ansprüche 1 bis 5, dadurch gekennzeichnet, daß das Rohr (1) wenigstens zweilagig mit dem Kunststoffasermattenmaterial umhüllt wird.

7. Schutzumhüllung aus einem mattenförmigen Kunststoffasermaterial für ein erdverlegbares Kunststoffrohr, mit den Merkmalen der Ansprüche 1 bis 6, dadurch gekennzeichnet, daß das mattenförmige Kunststoffasermaterial (4.3) je Teillänge mit wenigstens einem Metallelement (8) in Verbindung steht.

8. Schutzumhüllung nach Anspruch 7, dadurch gekennzeichnet, daß das Metallelement (8) durch wenigstens einen Metalldraht gebildet wird..

9. Schutzumhüllung nach einem der Ansprüche 7 oder 8, dadurch gekennzeichnet, daß das Metallelement (8) mit einem Korrosionsschutzmantel versehen ist.

10. Schutzumhüllung nach einem der Ansprüche 1 bis 9, dadurch gekennzeichnet, daß mehrere Metallelemente in Form von Metalldrähten oder mit Metallanteilen versetzten Fäden in das mattenförmige Kunststoffasermaterial eingearbeitet sind.

## Claims

1. A protective covering for a pipe which can be laid in the earth, in particular a plastic pipe, preferably pressure-proof pipe of HDPE for gas lines, which forms at least one covering (4) of a mat-like plastics fibre material, characterised in that the covering (4) is in the form of a tube produced from the plastics fibre material, which can be pulled loosely on to the pipe (1, 2).

2. A protective covering according to Claim 1, characterised in that the tubular plastics mat which is produced from a bonded plastics fabric is dimensioned such that it can be applied to the pipe in a push-pull movement.

3. A protective covering according to Claims 1 and 2, characterised in that the tube is formed from a mat strip which is joined together via a longitudinal seam.

4. A protective covering according to one of Claims 1 to 3, characterised in that at least one end of the tube is provided with a textile hooked band (6) which is fastened to the tube, extending over at least part of the periphery.

5. A protective covering according to one of Claims 1 to 4, characterised in that the hook side of the hooked band (6) is directed against the outer wall of the tube (1).

6. A protective covering according to one of Claims 1 to 5, characterised in that the pipe (1) is covered in at least two layers with the plastics fibre mat material.

7. A protective covering consisting of a mat-like plastics fibre material for a plastic pipe which can be laid in the earth, having the features of Claims 1 to 6, characterised in that the mat-like plastics fibre material (4.3) is connected to at least one metal element (8) per partial length.

8. A protective covering according to Claim 7, characterised in that the metal element (8) is formed by at least one metal wire.

9. A protective covering according to one of Claims 7 or 8, characterised in that the metal element (8) is -provided with an anti-corrosion jacket.

10. A protective covering according to one of Claims 1 to 9, characterised in that a plurality of metal elements in the form of metal wires or threads having a metal content are incorporated into the mat-like plastics fibre material.

## Revendications

1. Gaine de protection pour un tuyau posé en terre, en particulier un tuyau en plastique, de préférence un tuyau résistant à la pression qui est en PEHD pour des conduites de gaz qui forme au moins une gaine (4) en matériau de fibres plastiques sous forme de mat, caractérisée par le fait que la gaine (4) est sous la forme d'un tube fabriqué en matériau de fibres plastiques qui peut être monté de façon lâche sur le tuyau (1, 2).

2. Gaine de protection selon la revendication 1, caractérisée par le fait que le mat en plastique sous forme d'un tube, confectionné dans une garniture en fibres de plastique, a une taille telle qu'il puisse être enfilé sur le tuyau en le poussant ou en le tirant.

3. Gaine de protection selon les revendications 1 et 2, caractérisée par le fait que le tube est formé par une bande de mat, qui est assemblée par une couture dans le sens de la longueur.

4. Gaine de protection selon l'une des revendications 1 à 3, caractérisée par le fait qu'au moins une extrémité du tube porte une bande textile à crochets (6), qui est fixée au tube sur au moins une partie de sa circonférence.

5. Gaine de protection selon l'une des revendications 1 à 4, caractérisée par le fait que le coté à crochets de la bande (6) est dirigé vers le côté extérieur de la paroi du tuyau (1).

6. Gaine de protection selon l'une des revendications 1 à 5, caractérisée par le fait que le tuyau (1) est enveloppé par un matériau en fibres plastiques sous forme de mat ayant au moins une double épaisseur.

7. Gaine de protection en matériau de fibres plastiques sous forme de mat pour un tuyau posé en terre selon les revendications 1 à 6, caractérisée par le fait que le matériau en fibres plastiques sous forme de mat (4.3) est relié au moins à un élément de métal pour chaque longueur partielle.

8. Gaine de protection selon la revendication 7, caractérisée par le fait que l'élément de métal est formé par au moins un fil métallique.

9. Gaine de protection selon l'une des revendications 7 ou 8, caractérisée par le fait que l'élément de métal (8) porte un revêtement de protection anticorrosion.

10. Gaine de protection selon l'une des revendications 1 à 9, caractérisée par le fait que plusieurs éléments de métal sous forme de fils métalliques ou de fibres additionnées de particules métalliques sont intégrés dans le matériau en fibres plastiques sous forme de mat.
